# EUROPÄISCHE PATENTSCHRIFT

(11) **EP 3 382 868 B1**
(45) Veröffentlichungstag und Bekanntmachung des Hinweises auf die Patenterteilung: **10.03.2021**
(21) Anmeldenummer: 18162511.2
(22) Anmeldetag: 19.03.2018
(51) Int. Cl.: H02K 53/00, H02K 7/075, H02K 7/18, H02K 7/20, H02K 35/02

(54) **ELEKTROMOTOR**
ELECTRIC MOTOR
MOTEUR ÉLECTRIQUE

(30) Priorität: 30.03.2017 DE 102017003102; 21.09.2017 DE 202017105738 U
(43) Veröffentlichungstag der Anmeldung: 03.10.2018
(73) Patentinhaber: Varli, Mustafa, 41065 Mönchengladbach (DE)
(72) Erfinder: VARLI, Mustafa, 41065 Mönchengladbach (DE); VARLI, Bülent, 41065 Mönchengladbach (DE)
(74) Vertreter: Fabry, Bernd

(56) Entgegenhaltungen:
- WO-A2-2011/078808
- WO-A2-2014/105703
- US-A1- 2014 306 532

## Beschreibung

### Gebiet der Erfindung

Die Erfindung befindet sich auf dem Gebiet der Elektrotechnik und betrifft einen neuen Elektromotor mit verringertem Energieverlust und Energierückgewinnung.

### Technologischer Hintergrund

Die Drehbewegung eines Elektromotors beruht auf den Anziehungs- und Abstoßungskräften, die mehrere Magnetfelder aufeinander ausüben (Lorentzkraft). Im üblichen Elektromotor gibt es einen feststehenden Außenteil sowie einen sich darin drehenden Innenteil. Entweder besitzt einer davon Permanentmagneten und der andere elektrische Spulen, oder beide Komponenten besitzen Spulen. Jede stromdurchflossene Spule erzeugt ein Magnetfeld, dessen Ausrichtung (Nordpol/Südpol) abhängig von der Stromrichtung ist - fließt der Strom in entgegengesetzter Richtung durch die Spule, so wird auch das Magnetfeld umgedreht. Durch mehrfaches, passendes Umpolen der Spulen während eines Umlaufs wird eine kontinuierliche Drehung des Innenteils erreicht.

Seit den grundlegenden Entwicklungen von ØERSTEDT und FARADAY aus den Jahren 1820/21 und dem von SIEMENS entwickelten ersten Dynamo ist der Elektromotor eines der Kennzeichen der zweiten industriellen Revolution geworden. Gibt man heute diesen Begriff in den einschlägigen Datenbanken an, zeigt die Trefferliste weit über 300.000 Patente an, die zu diesem Thema angemeldet und erteilt worden sind.

Unter dem Stichwort "E-Mobilität" kommt dem Elektromotor heute zusätzliches kommerzielles Interesse zu. Gesucht werden hocheffiziente Motoren, die bei in der Lage sind, Motoren wie sie in Kraftfahrzeugen zum Einsatz kommen, bei begrenzter Menge an Batteriestrom möglichst lange zu bewegen. Ein kritischer Punkt ist dabei die Rückgewinnung der Energie, die zur Primärinduktion in der Rotor-Stator-Kombination erforderlich ist, noch während des Betriebs, da Motoren des Stands der Technik hierfür bislang noch keine zufriedenstellende Lösung anbieten.

Ein weiterer Nachteil der Motoren des Stands der Technik besteht darin, dass sie sich rasch erhitzen, wodurch in der Folge eine hohe dissipative Reibung entsteht, d.h. eine Umwandlung der elektrischen Energie nicht in mechanische Energie, sondern in Wärme.

Ebenfalls von Nachteil ist, dass herkömmliche Motoren Kennlinien aufweisen, gemäß denen das Drehmoment nicht linear mit der Leistung steigt, sondern in der Regel ein Maximum erreicht und anschließend sogar wieder abfallen kann.

### Stand der Technik

Die US 2014 0306532 A1 (LLOYD GRAY) offenbart einen Generator, der sich durch eine radiale Anordnung von fünf Zylindern um eine gemeinsame Kurbelwelle auszeichnet. Die mechanische Eingangsleistung eines Motors wird auf die Kurbelwelle aufgebracht, um sie in elektrische Ausgangsleistung umzuwandeln. Jeder der fünf Radialzylinder enthält vier Sätze von gleich beabstandeten Pendelmagneten von Kopf bis Fuß angeordnet und durch Abstandshalter und Isolatoren getrennt sind. Die Shuttle-Magnete sind dabei als Baugruppe auf einer Stange montiert, die unabhängig von der Kurbelwelle angetrieben wird, so dass sich jede der fünf Stangen in verschiedenen Phasen innerhalb von vier aufeinander abgestimmten Sätzen von gleich beabstandeten Pickup-Spulen entsprechend hin und her bewegen kann. Wechselströme von jeder der insgesamt zwanzig Pickup-Spulen werden einzeln gleichgerichtet, gefiltert und geregelt, um Bänke von Batterien oder Ultra-Kondensatoren zu laden. Festkörper-Wechselrichter können an die Batterien oder Ultra-Kondensatoren angeschlossen werden, um beispielsweise Wechselstrom zu erzeugen.

### Aufgabe der Erfindung

Die Aufgabe der vorliegenden hat daher darin bestanden, einen Elektromotor zur Verfügung zu stellen, der genau diese Nachteile überwindet, d.h. der die Rückgewinnung der zum Betrieb der Rotorspule erforderlichen Fremdenergie zu mindestens, 50, vorzugsweise zu mindestens 70 % während des Betriebs ermöglicht. Des Weiteren sollten die Energieverluste durch Wärmeentwicklung deutlich vermindert werden.

### Beschreibung der Erfindung

Die Erfindung wird bezüglich eines Elektromotors durch die Merkmale des Anspruchs 1 wiedergegeben. Die weiteren rückbezogenen Ansprüche betreffen vorteilhafte Aus- und Weiterbildungen der Erfindung.

Mit Hilfe des neuartigen Elektromotors ist es erstmals möglich, die zur primären Induktion des Magnetfelds im Rotor benötigte elektrische Primärleistung von 500 bis 2.000 Watt und typisch von etwa 1200 Watt über sekundär in den Zylindern induzierte Magnetfelder zumindest teilweise wieder rückzugewinnen.

Überraschenderweise wurde ferner gefunden, dass der erfindungsgemäße Elektromotors im Vergleich zu anderen Elektromotoren des Stands der Technik eine deutlich geringe Temperaturentwicklung aufweist und daher die dissipativen Reibungsverluste erheblich vermindert werden.

Ebenfalls überraschend war der Befund, dass das Drehmoment des Motors mit der Leistung nicht nur im Wesentlichen linear, sondern sogar leicht exponentiell ansteigt.

### Antriebsprinzip

Der Antrieb des erfindungsgemäßen Elektromotors erfolgt dadurch, dass durch Stromfluss in rotierenden Leiterspulen Magnetfelder induziert werden, deren gegenseitige Anziehungs- und Abstoßungskräfte gegenüber einem fest installierten Dauermagneten in die Bewegung einer Antriebswelle umgesetzt werden. Dabei werden Drehzahlen von typisch 500 bis 1.800 du sogar bis etwa 2.000 U/min erzielt.

Konkret besteht der Antrieb aus einem Dauermagneten, dem Stator, der ein konstantes Magnetfeld erzeugt, sowie dem beweglichen teil, der als Rotor, Läufer oder Anker bezeichnet wird und sich zwischen den beiden Polen des Stators bewegt. Der Rotor wird von einer Antriebselle, beispielsweise einer Kurbelwelle, gehalten, die drehbar gelagert ist. Um den Rotor, beispielsweise einen Eisenkern, ist eine Spule gewickelt, die von einem elektrischen Strom durchflossen wird. Die Stromversorgung erfolgt über Schleifkontakte, sogenannte "Bürsten", welche am Rotor angebracht sind. Erfolgt der Antrieb durch Gleichstrom, ist als weiteres Element ein Polwender (Kommutator) vorgesehen, der die Stromrichtung jeweils umkehrt, damit der Rotor nicht stehen bleibt, sobald sich entgegen gerichtete Pole von Rotor und Stator einander gegenüberstehen.

Wird die Spule vom Strom durchflossen, wird der Rotorkern magnetisiert. Durch die Abstoßung ungleicher Pole kommt es zu einer Drehbewegung des Rotors im Statorgehäuse, die dadurch kontinuierlich wird, dass sich die Stromrichtung und damit die Polarität des Rotormagneten bei Verwendung von Wechselstrom automatisch periodisch ändern bzw. bei Gleichstromantrieb durch den Polwender gesteuert geändert wird. Die Drehbewegung wird auf die Antriebswelle übertragen und somit elektrische Energie in mechanische Energie umgewandelt.

### Prinzip der Energierückgewinnung

Im Sinne der vorliegenden Erfindung dient die Antriebswelle dazu, zwei oder mehrere Zylinder anzutreiben. Anders als bei klassischen Elektromotoren wird hier keine Rotationsenergie, sondern translatorische Energie erzeugt und genutzt.

Die Zylinder sind dadurch gekennzeichnet, dass sie mindestens einen, vorzugsweise aber zwei oder drei Magnetkerne enthalten, die auf Pleuelstangen angeordnet sind, welche wieder mit der Antriebswelle in Verbindung stehen. Konkret wird die Drehbewegung der Antriebswelle über die Pleuel in eine translatorische Bewegung der Pleuelstangen und damit der Magnete in den einzelnen Zylindern umgesetzt.

Während die Magnete über die Pleuelstangen in den Zylindern also beweglich sind und durch die Antriebswelle entlang der Zylinderachsen vor- und zurück bewegt werden, enthalten die Zylinder des Weiteren mindestens eine, vorzugsweise aber ebenfalls zwei oder drei Spulen, die fest mit dem Gehäuse des Zylinders verbunden und darin vorzugsweise konzentrisch angeordnet sind. Durch die Bewegung der Magnete entlang der Zylinderachse durchfahren diese regelmäßig die Spule und induzieren dabei jeweils ein Magnetfeld, d.h. erzeugen elektrische Energie, die abgenommen, gespeichert oder wieder dem elektrischen Antrieb zugeführt werden kann. Auf diese Weise ist es möglich, mindestens 50 und sogar bis zu 70 % der Energie, die für die Induktion des Magnetfelds im Rotor benötigt wird, wieder rückzugewinnen.

Vorzugsweise weist die erfindungsgemäße Vorrichtung zwei, vier, sechs oder acht Zylinder auf, die üblicherweise jeweils paarweise einander gegenüberliegend angeordnet sind und über die Pleuelstangen von der Antriebswelle abgetrieben werden. Auf diese Weise lassen sich die Zylinder dann auch takten.

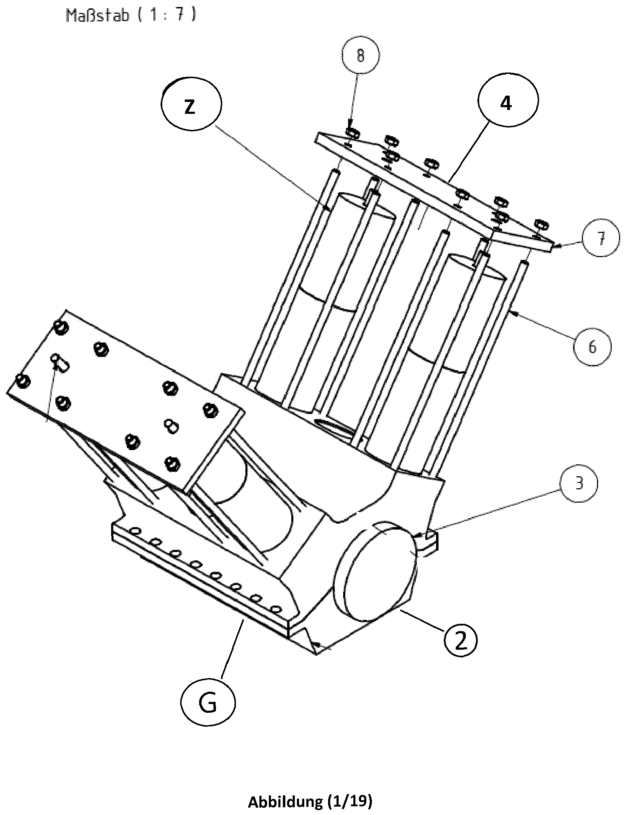

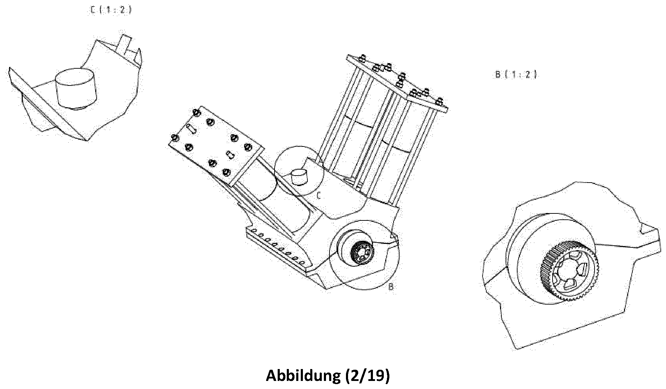

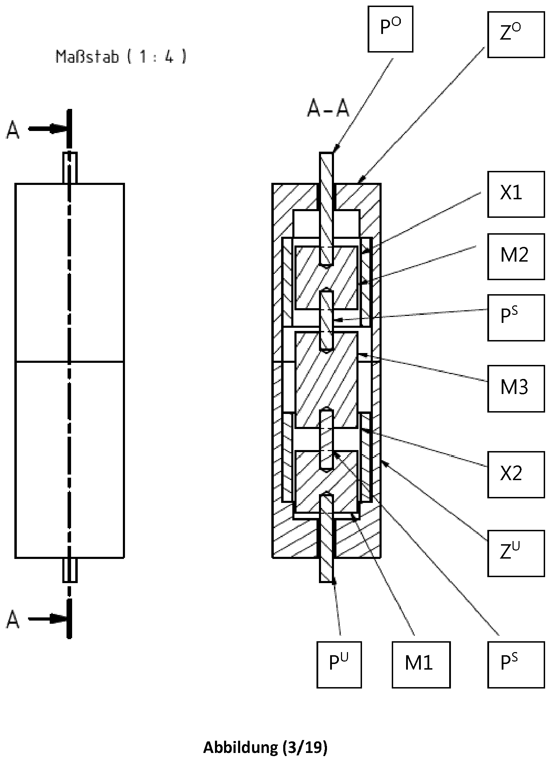

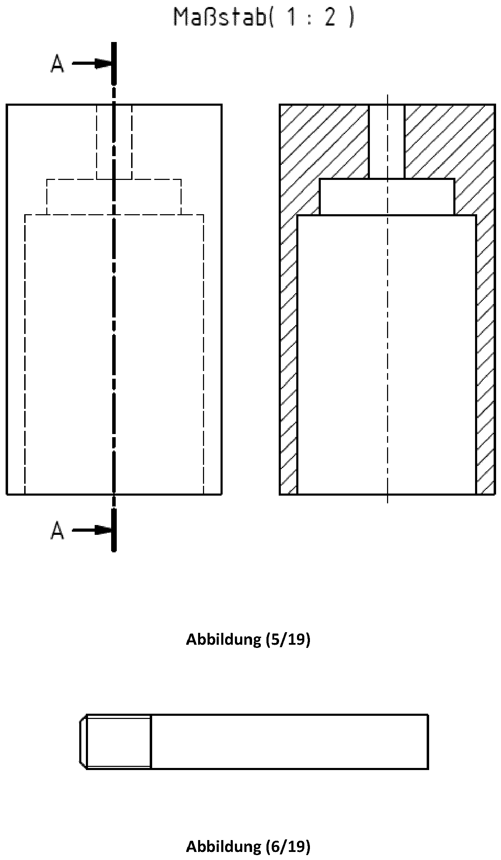

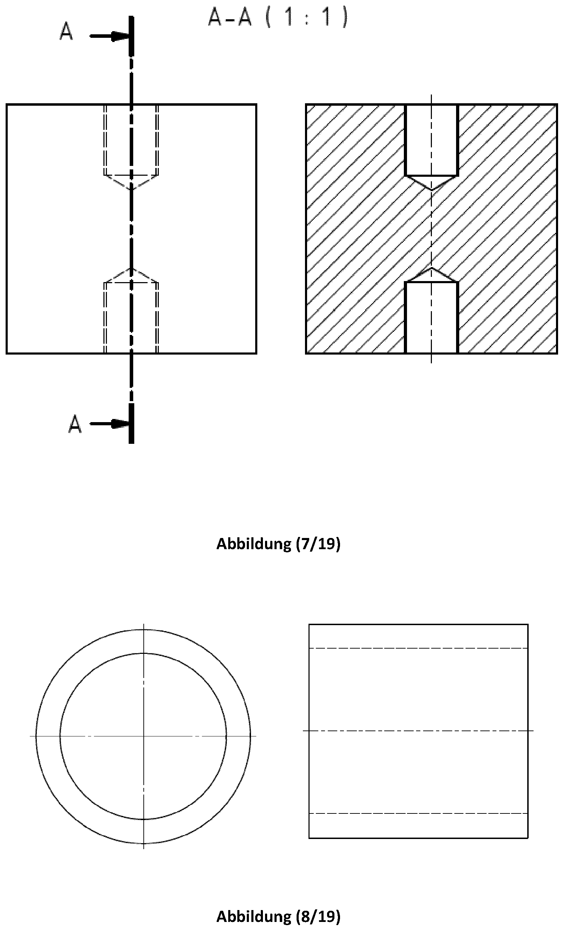

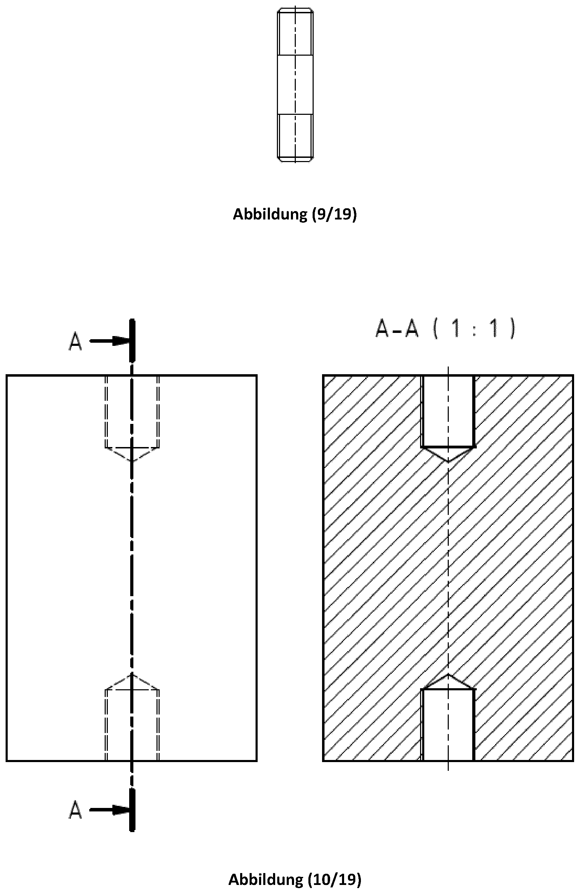

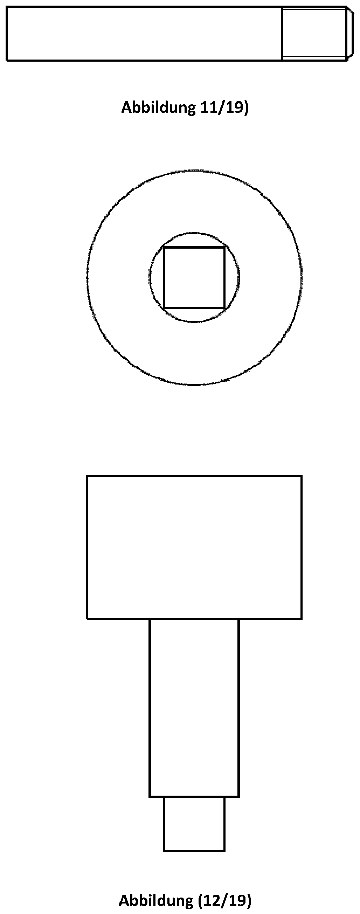

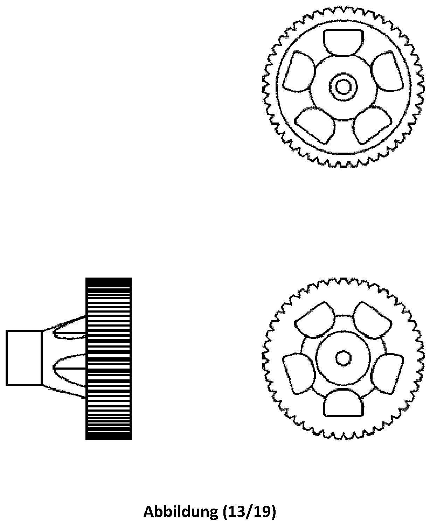

Die Erfindung wird nachfolgend durch die **Abbildungen 1 bis 19** näher erläutert, ohne darauf eingeschränkt zu werden. Nachfolgend wird die Bedeutung der Bezugszeichen angegeben:
- (1): Elektromotor Detailzeichnung
- (2): Elektromotor mit herausgelösten Ansichten auf Antrieb und Antriebswelle
- (3): Zylinder
- (4): Gehäuse - oben
- (5): Gehäuse - unten
- (6): Alu-Rundstab - oben
- (7): Neodym Magnet 1
- (8): Spule
- (9): Alu-Rundstab - Verbindung
- (10): Neodym Magnet 2
- (11): Alu-Rundstab - unten
- (12): Antriebswelle
- (13): Zahnrad der Antriebswelle

**Abbildung 1** zeigt eine Sicht auf einen Elektromotor mit insgesamt 4 Zylindern, die einander gegenüber angeordnet sind. Die dort verwendeten Bezugszeichen haben folgende Bedeutung:
- (G): Gehäuse
- (2): Motorwanne (Metall)
- (B): Antriebswelle
- (4): Oberteil
- (Z): Zylinder
- (6): Rundstäbe für die Seitenhalterung
- (7): Abdeckung
- (8): Schrauben

Das Gehäuse (G) besteht aus einem unteren Teil, der "Wanne" (2) sowie einem Oberteil (4), welches die Zylinder (Z) enthält. Diese sind paarweise angeordnet und werden durch jeweils 4 Rundstäbe (6) sowie eine Abdeckung (7) in ihrer Lage fixiert. Die Rundstäbe, die als Seitenhalterung dienen sind mit der Abdeckung durch Gewindebohrungen verschraubt (8). Zwischen den beiden Gehäuseteilen befindet sich das Lager der Antriebswelle (B).

**Abbildung 2** zeigt eine zweite, detailliertere Sicht auf den Elektromotor. Hier ist als Detail der Antrieb (C) zu erkennen, also die Rotor-Stator-Kombination, die mit der Antriebswelle (B) verbunden ist.

**Abbildung 3** zeigt einen Schnitt durch einen Zylinder und zwar im Zustand einer maximalen Auslenkung der Magnete. Die dort verwendeten Bezugszeichnen haben die folgende Bedeutung:
- (Z^{O}): Zylindergehäuse, oberer Teil
- (Z^{U}): Zylindergehäuse, unterer Teil
- (P^{O}): Pleuelstange, oberer Teil
- (M1,M2): Magnetkerne 1 und 2
- (X1, X2): Spulen
- (P^{S}): Pleuelstange, Verbindungsstück
- (M3): Magnetkern 3
- (P^{U}): Pleuelstange, unterer Teil

Das Zylindergehäuse, welches in der Regel aus Kunststoff gefertigt ist, weist am oberen und unteren Ende einen Durchbruch auf, durch den die Pleuelstange geführt wird. Dabei kann es sich grundsätzlich um eine durchgehende Stange, beispielsweise einen Aluminiumstab, handeln, auf welcher die Magnete aufgereiht sind. Der vorliegende Schnitt zeigt jedoch eine gleichwirkende, aber technisch einfachere Alternative, bei der die abgebildeten drei Magnete jeweils durch voneinander getrennte Pleuelstangenelemente (P^{O}, P^{S}, P^{U}) verbunden sind.

Die Anordnung funktioniert grundsätzlich auch mit einem Magneten, der durch das Feld einer Spule fährt, es hat sich jedoch im Hinblick auf einen höheren Energierückgewinnungsgrad als vorteilhaft erweisen, zwei oder vorzugsweise 3 Magnete einzusetzen. Diese sollten von ihren Durchmessern gleich und dem Querschnitt des Zylinders angepasst sein, ihre Längen können jedoch gleich oder verschieden sein. Typisch sind Durchmesser von 1 bis etwa 10 cm und vorzugsweise etwa 2 bis etwa 4 cm. Typische Längen sind etwa 2 bis etwa 20 cm und vorzugsweise etwa 4 bis etwa 8 cm. Wie in der Abbildung dargestellt, empfiehlt es sich aus Stabilitätsgründen, die beiden äußeren Magnete etwas kürzer auszuführen als den mittleren. Besonders bevorzugt sind dabei sogenannte Neodym-Magnete, d.h. Dauermagnete aus einer Legierung aus Neodym, Eisen und Bor mit der Zusammensetzung Nd₂Fe₁₄B.

Die Spulen (X1, X2) sind konzentrisch im Zylindergehäuse angeordnet, so dass die Magnete leicht hindurchbewegt werden können und bei jedem Durchgang ein elektrisches Feld induzieren. Üblicherweise sind in jedem Zylinder zwei Spulen vorhanden.

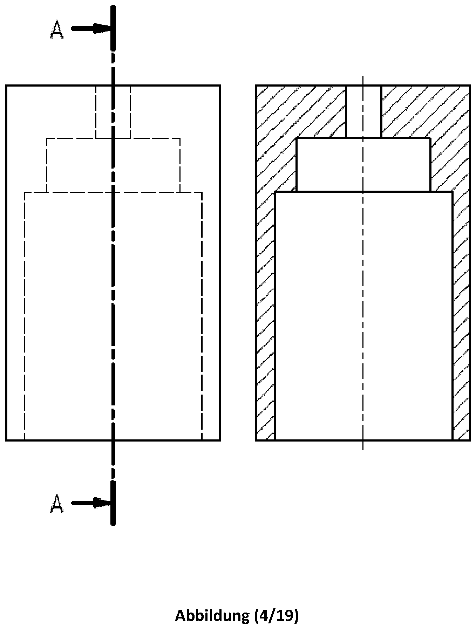

Die übrigen **Abbildungen 4 bis 13** zeigen einzelne Details der oben erläuterten Elemente, die keiner weiteren Erläuterung bedürfen.

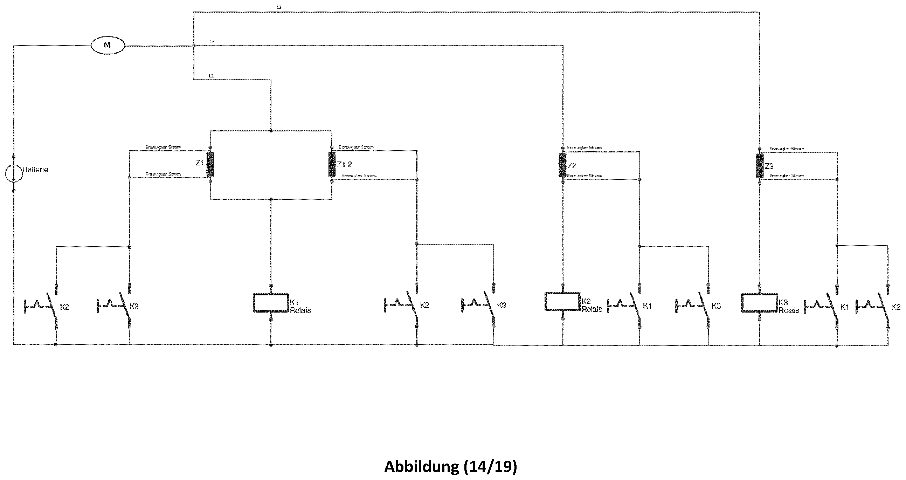

Die **Abbildung 14** zeigt die elektrische Schaltung des erfindungsgemäßen Elektromotors. Darin bedeuten:
- M Ankerwicklung
- Z1 bis Z3 Antriebszylinder
- K1 bis K3 Relais
- L1 bis L3 Leitungen, von denen in Abhängigkeit der Schaltung der Relais jeweils eine stromführend und die anderen beiden stromlos sind.

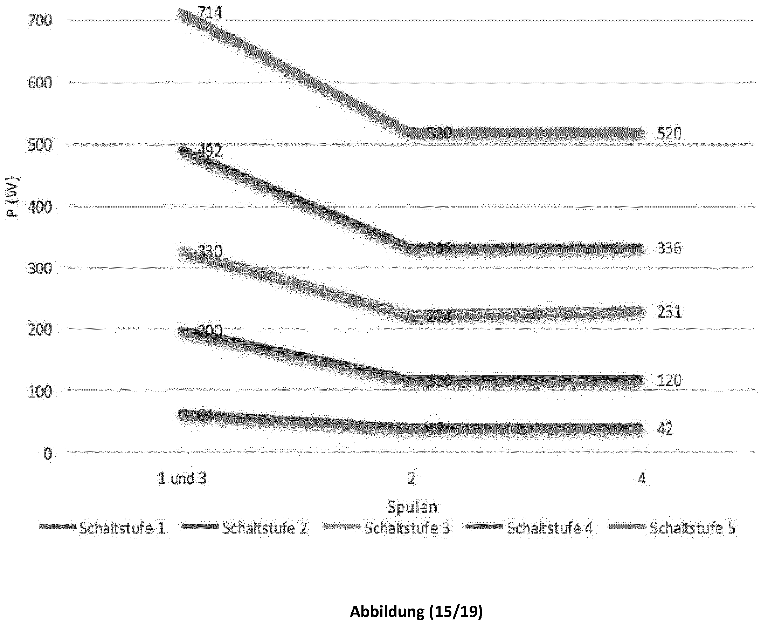

In den **Abbildungen 15 bis 19** sind Leistungskennzahlen des Elektromotors wiedergegeben:

**Abbildung 15** zeigt den Leerlauf Leistungsverbrauch an den einzelnen Spulen bei verschiedenen Schaltstufen. Die Leistungsmessung wurde mit fünf verschiedenen Eingangsspannungen durchgeführt. Hierbei wurden die einzelnen Spulen nach ihrer Funktionsreihenfolge bemessen. Die ermittelten Ergebnisse zeigen, dass der Elektromotor mit der derzeitigen höchsten Schaltstufe maximal eine Leistung von 714 Watt verbraucht. Die maximale Zugkraft wurde zu 2000 N bei 2 kW ermittelt.

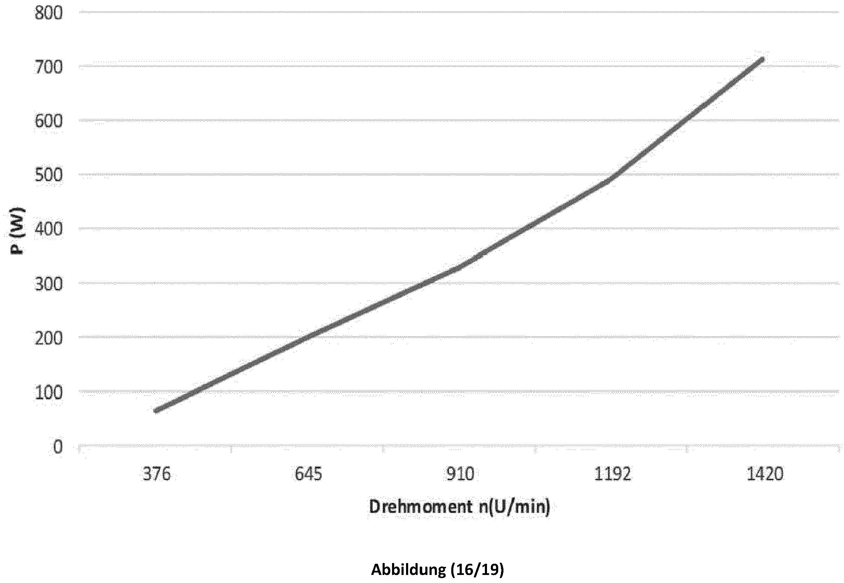

**Abbildung 16** zeigt ein Drehzahl-Leistungsdiagramm. Die Drehzahlmessung zeigt, dass der Elektromotor den gewünschten steigenden exponentiellen Verlauf des Drehmomentes in Abhängigkeit zur Leistung aufweist.

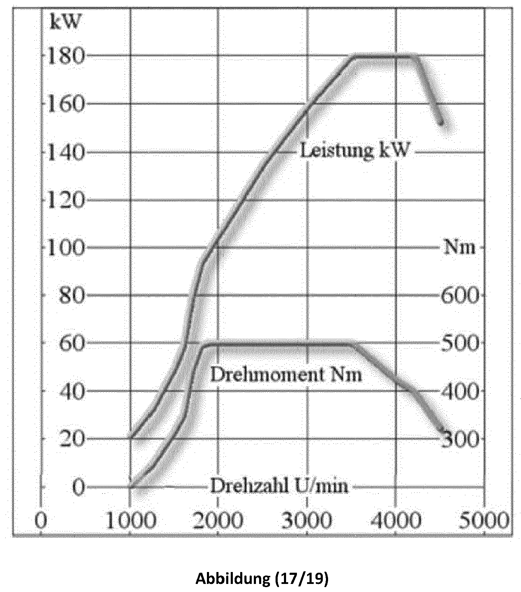

**Abbildung 17** dient zum Vergleich und zeigt eine Standard-Motorenkennlinie, bei der man erkennt, dass das Drehmoment nicht mit der Leistung steigt. Ein Vergleich der Abbildungen 16 und 17 zeigt, dass der erfindungsgemäße Elektromotor lediglich 500 W für 1200 U/min benötigt, ein herkömmlicher Ottomotor braucht für die gleiche Umdrehungszahl hingegen eine Leistung von knapp 22 kW.

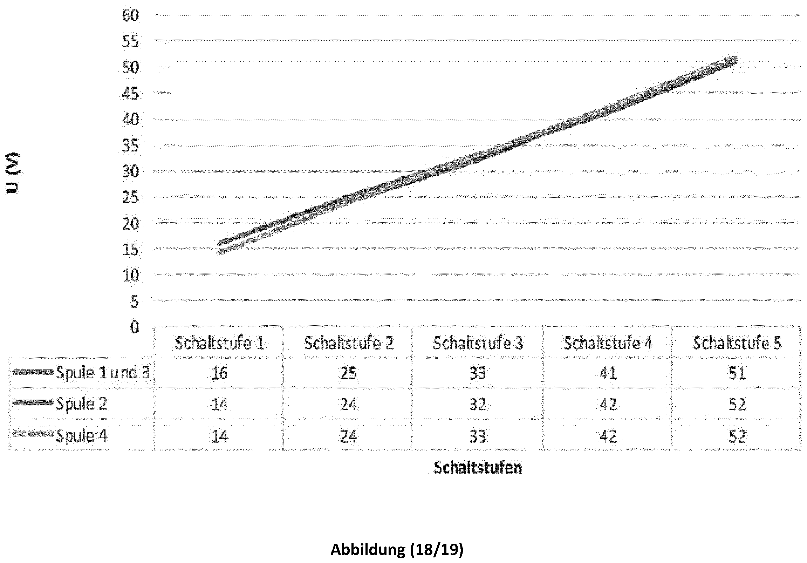

**Abbildung 18** zeigt eine Spannungsmessung, bei der man an allen Spulen einen steigenden linearen Spannungsverlauf in den fünf Einschaltstufen erkennt.

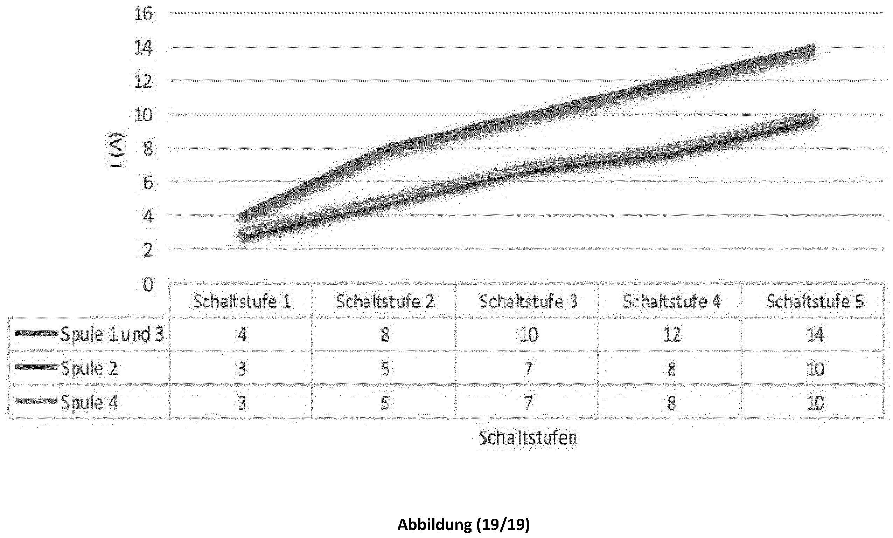

**Abbildung 19** zeigt eine Strommessung. Man erkennt bei den Spulen 2 und 4 eine gleiche lineare Verteilung des Stroms in allen Einschaltstufen. Die Spulen 1 und 3 haben aufgrund der parallelen Funktionsweise einen erhöhten Stromfluss im Vergleich zu Spule 2 und 4 die einzeln bewegt werden.

In einer weiteren Ausführungsform der Erfindung lässt sich der Elektromotor auch in Reihe an einen Generator anschließen, der dann Leistungen von bis zu 5.000 Watt/h liefert. Daneben sind typische Einsatzgebiete des neuen Motors Kraftfahrzeuge, LKWs, Busse, Schiffe, Flugzeuge und dergleichen.

## Patentansprüche

1. Elektromotor für den Einbau in ein Kraftfahrzeug zur Abnahme elektrischer Energie, zu deren Speicherung oder Rückführung zu einem elektrischen Antrieb, enthaltend oder bestehend aus
(i) einen Antrieb (C) enthaltend
(i-a) ein fest angeordnetes magnetisches Statorelement;
(i-b) ein im Statorelement beweglich angeordnetes Rotorelement bestehend aus einem Eisenkern und einer darum gewickelten Rotorspule;
(i-c) eine Antriebswelle (B), die drehbar gelagert ist auf der das Rotorelement (R) angeordnet ist;
(i-d) eine Stromversorgung mit Schleifkontakten zum Antrieb des Rotorelementes; sowie gegebenenfalls
(i-e) einen Polwender;
(ii) mindestens zwei Zylinder (Z), darin jeweils enthaltend
(ii-a) mindestens einen Magnetkern (M1, M2, M3);
(ii-b) mindestens eine Zylinderspule (X1, X2);
(ii-c) eine Pleuelstange (P^{O},P^{S},P^{U});
(ii-d) einen Pleuel;
(iii) ein Gehäuse (G) zur Aufnahme des Antriebs (C) und der Zylinder (Z),
wobei
(a) die Magnetkerne (M1, M2, M3) auf den Pleuelstangen (P^{O},P^{S},P^{U}) angeordnet und innerhalb der Zylinder (Z) beweglich sind;
(b) die mindestens eine Zylinderspule (X1, X2) im Zylinder (Z) fest angeordnet ist;
(c) die Magnetkerne (M1. M2, M3) über die Pleuelstangen (P^{O}, P^{S}, P^{U}) mit der Antriebswelle (B) verbunden sind;
(d) die Pleuelstangen in zwei gegenüberliegenden Gruppen angeordnet und diese beiden Gruppen jeweils mit der Antriebswelle (B) so verbunden sind, dass sie eine "V"-Form bilden; wobei
(e) die Drehbewegung der Antriebswelle (B) über die Pleuel in eine translatorische Bewegung der Pleuelstangen (P^{O}, P^{S}, P^{U}) und damit der Magnetkerne (M1, M2, M3) in den einzelnen Zylindern (Z) umgesetzt wird, und
(f) die Magnetkerne (M1, M2, M3) dabei regelmäßig die im Zylinder (Z) angeordneten Zylinderspulen (X1, X2) durchfahren und dabei ein Magnetfeld induzieren und elektrische Energie erzeugen.

2. Elektromotor nach Anspruch 1, **dadurch gekennzeichnet, dass** er zwei, vier, sechs oder acht Zylinder (Z) aufweist, die jeweils paarweise einander gegenüberliegend angeordnet sind und über die Pleuelstangen (P^{O}, P^{S}, P^{U}) von der Antriebswelle (B) angetrieben werden.

3. Elektromotor nach den Ansprüchen 1 und/oder 2, **dadurch gekennzeichnet, dass** er mit einer Primärleistung von 500 bis 2.000 Watt betrieben wird.

4. Elektromotor nach mindestens einem der Ansprüche 1 bis 3, **dadurch gekennzeichnet, dass** er mit einer Drehzahl von bis zu 2.000 U/min betrieben wird.

5. Elektromotor nach mindestens einem der Ansprüche 1 bis 4, **dadurch gekennzeichnet, dass** er eine Rückgewinnung der zum Betrieb der Rotorspule erforderlichen Fremdenergie von mindestens 50 % leistet.

6. Elektromotor nach mindestens einem der Ansprüche 1 bis 5, **dadurch gekennzeichnet, dass** die Zylinder (Z) mindestens zwei, vorzugsweise drei Magnetkerne (M1, M2, M3) enthalten.

7. Elektromotor nach Anspruch 5, **dadurch gekennzeichnet, dass** die Magnetkerne (M1, m2, M3) gleiche Durchmesser und gleiche oder verschiedene Längen aufweisen.

8. Elektromotor nach mindestens einem der Ansprüche 1 bis 7, **dadurch gekennzeichnet, dass** die Magnetkerne (M1, M2, M3) aus Neodym-Legierung bestehen.

9. Elektromotor nach mindestens einem der Ansprüche 1 bis 8, **dadurch gekennzeichnet, dass** die Zylinder (Z) mindestens zwei Zylinderspulen (X1, X2) enthalten.

10. Energieerzeuger, umfassend mindestens einen Elektromotor nach mindestens einem der Ansprüche 1 bis 9 und einen damit in Reihe geschalteten Generator.

## Claims

1. Electric motor for installation in a motor vehicle for tapping electrical energy, storing it or feeding it back to an electric drive, comprising or consisting of
(i) a drive (C) containing
(i-a) a fixed magnetic stator element;
(i-b) a rotor element movably disposed in the stator element and consisting of an iron core and a rotor coil wound there around; and
(i-c) a drive shaft (B) which is rotatable mounted on which the rotor element (R) is arranged;
(i-d) a power supply with sliding contacts for driving the rotor element; and optionally
(i-e) a pole changer;
(ii) at least two cylinders (Z), each containing therein
(ii-a) at least one magnetic core (M1, M2, M3);
(ii-b) at least one cylinder coil (X1, X2);
(ii-c) a connecting rod (PO,PS,PU);
(ii-d) a connecting rod;
(iii) a housing (G) for containing the actuator (C) and the cylinders (Z),
wherein
(a) the magnetic cores (M1, M2, M3) are arranged on the connecting rods (PO,PS,PU) and are movable within the cylinders (Z)
(b) the at least one cylinder coil (X1, X2) being fixedly arranged in the cylinder (Z);
(c) the magnet cores (M1, M2, M3) are connected to the drive shaft (B) via the connecting rods (PO, PS, PU);
(d) the connecting rods are arranged in two opposite groups and these two groups are respectively connected to the drive shaft (B) so as to form a "V" shape; wherein
(e) the rotary motion of the drive shaft (B) is converted via the connecting rods into a translational motion of the connecting rods (PO, PS, PU) and thus of the magnetic cores (M1, M2, M3) in the individual cylinders (Z), and
(f) the magnetic cores (M1, M2, M3) thereby regularly pass through the cylinder coils (X1, X2) arranged in the cylinder (Z) and thereby induce a magnetic field and generate electrical energy.

2. Electric motor according to claim 1, **characterized in that** it has two, four, six or eight cylinders (Z), each of which is arranged in pairs opposite one another and is driven by the drive shaft (B) via the connecting rods (PO, PS, PU).

3. Electric motor according to claims 1 and/or 2, **characterized in that** it is operated with a primary power of 500 to 2,000 watts.

4. Electric motor according to at least one of claims 1 to 3, **characterized in that** it is operated at a speed of up to 2,000 rpm.

5. Electric motor according to at least one of claims 1 to 4, **characterized in that** it provides a recovery of at least 50 % of the external energy required to operate the rotor coil.

6. Electric motor according to at least one of claims 1 to 5, **characterized in that** the cylinders (Z) contain at least two, preferably three, magnetic cores (M1, M2, M3).

7. Electric motor according to claim 5, **characterized in that** the magnetic cores (M1, M2, M3) have equal diameters and equal or different lengths.

8. Electric motor according to at least one of claims 1 to 7, **characterized in that** the magnetic cores (M1, M2, M3) consist of neodymium alloy.

9. Electric motor according to at least one of claims 1 to 8, **characterized in that** the cylinders (Z) comprise at least two cylindrical coils (X1, X2).

10. Power generator comprising at least one electric motor according to at least one of claims 1 to 9 and a generator connected in series therewith.

## Revendications

1. Moteur électrique destiné à être installé dans un véhicule automobile pour prélever de l'énergie électrique, la stocker ou la renvoyer à un entraînement électrique, comprenant ou consistant en
(i) un entrainement (C) contenant
(i-a) un élément de stator magnétique fixe ;
(i-b) un élément de rotor disposé de manière mobile dans l'élément de stator et constitué d'un noyau de fer et d'une bobine de rotor enroulée autour de celui-ci ; et
(i-c) un arbre d'entraînement (B) qui est monté à rotation et sur lequel est disposé l'élément de rotor (R) ;
(i-d) une alimentation de courant avec des contacts glissants pour l'entraînement de l'élément de rotor ; et éventuellement
(i-e) un changeur de pôles ;
(ii) au moins deux cylindres (Z), contenant chacun
(ii-a) au moins un noyau magnétique (M1, M2, M3) ;
(ii-b) au moins un solénoïde (X1, X2) ;
(ii-c) une bielle (PO,PS,PU) ;
(ii-d) une bielle ;
(iii) un boîtier (G) destiné à contenir l'actionneur (C) et les cylindres (Z),
où
(a) les noyaux magnétiques (M1, M2, M3) sont disposés sur les bielles (PO, PS, PU) et sont mobiles dans les cylindres (Z)
(b) la bobine du cylindre (X1, X2) au moins étant disposée de manière fixe dans le cylindre (Z) ;
(c) les noyaux magnétiques (M1, M2, M3) sont reliés à l'arbre d'entraînement (B) par les bielles (PO, PS, PU) ;
(d) les bielles sont disposées en deux groupes opposés et ces deux groupes sont respectivement reliés à l'arbre d'entraînement (B) de manière à former un "V" ; dans lequel
(e) le mouvement de rotation de l'arbre d'entraînement (B) par l'intermédiaire des bielles est converti en un mouvement de translation des bielles (PO, PS, PU) et donc des noyaux magnétiques (M1, M2, M3) dans les différents cylindres (Z), et
(f) les noyaux magnétiques (M1, M2, M3) passent ainsi régulièrement à travers les bobines (X1, X2) disposées dans le cylindre (Z) et induisent ainsi un champ magnétique et génèrent de l'énergie électrique.

2. Moteur électrique selon la revendication 1, **caractérisé en ce qu'**il comporte deux, quatre, six ou huit cylindres (Z), dont chacun est disposé par paires en regard l'un de l'autre et est entraîné par l'arbre d'entraînement (B) par l'intermédiaire des bielles (PO, PS, PU).

3. Moteur électrique selon les revendications 1 et/ou 2, **caractérisé en ce qu'**il fonctionne avec une puissance primaire de 500 à 2 000 watts.

4. Moteur électrique selon au moins une des revendications 1 à 3, **caractérisé en ce qu'**il fonctionne à une vitesse allant jusqu'à 2 000 tr/min.

5. Moteur électrique selon au moins une des revendications 1 à 4, **caractérisé en ce qu'**il assure une récupération d'au moins 50% de l'énergie externe nécessaire au fonctionnement de la bobine du rotor.

6. Moteur électrique selon au moins une des revendications 1 à 5, **caractérisé en ce que** les cylindres (Z) contiennent au moins deux, de préférence trois, noyaux magnétiques (M1, M2, M3).

7. Moteur électrique selon la revendication 5, **caractérisé en ce que** les noyaux magnétiques (M1, M2, M3) ont des diamètres égaux et des longueurs égales ou différentes.

8. Moteur électrique selon au moins une des revendications 1 à 7, **caractérisé en ce que** les noyaux magnétiques (M1, M2, M3) sont constitués d'un alliage de néodyme.

9. Moteur électrique selon au moins une des revendications 1 à 8, **caractérisé en ce que** les cylindres (Z) comprennent au moins deux bobines cylindriques (X1, X2).

10. Générateur de puissance comprenant au moins un moteur électrique selon au moins une des revendications 1 à 9 et un générateur connecté en série avec celui-ci.
